# EUROPEAN PATENT APPLICATION

(11) **EP 1 754 613 A2**
(43) Date of publication of application: **21.02.2007**
(21) Application number: 06017083.4
(22) Date of filing: 16.08.2006
(51) Int. Cl.: B41J 35/00

(54) **Printing apparatus**

(30) Priority: 17.08.2005 JP 2005236445
(71) Applicant: Fuji Photo Film Co., Ltd., Minami-Ashigara-Shi, Kanagawa (JP)
(72) Inventor: Tsuji, Junichi, Kaisei-machi Ashigara-kami-gun Kanagawa (JP)
(74) Representative: Klunker . Schmitt-Nilson . Hirsch

(57) **Abstract**

The printing apparatus includes an image forming section for preparing prints and a packer which gathers the prints and packages them in a print pack or print packs. The image forming section prepares for each print pack an order print that shows information relevant to one order and supplies the prints and the order print into the packer in such a way that an information side of the order print will be on top in the print pack and distribution information showing that the prints for one order are distributed among the print packs is indicated on the order print. The packer feeds the prints into a long packaging sheet and thereafter seals and cuts the packaging sheet and performs only sealing of each print pack according to the distribution information and outputs the print packs for one order in a continuous form.

## Description

The entire content of a document cited in this specification is incorporated herein by reference.

### BACKGROUND OF THE INVENTION

The present invention relates to a printing apparatus that prepares photographic or other kinds of prints and packages them to make print packs.

As personal computers (PCs) and PDAs (personal digital assistants) are increasingly used, the penetration rate of digital cameras is growing. This is also true with cellular phones having a picture-taking capability.

Pictures taken with a digital camera, a cellular phone and the like are usually captured into a PC or the like, where they are processed for use in a variety of applications including posting on Internet websites and duplicating on New Year's cards. An equally strong demand exists for permanently recording those pictures as high-quality (photographic) prints. To meet this need, photo labs and other dedicated photo shops have recently started the business of preparing prints from the pictures taken with digital cameras, cellular phones and the like.

Asking a printing photo shop to prepare prints from the pictures taken with digital cameras and the like is commonly done through print order accepting machines (hereinafter referred to simply as order accepting machines) that are installed at photo labs or within various other commercial facilities.

To operate the order accepting machine, it is usually loaded with a recording medium such as a memory card, an IC card or a CD-R that stores the recorded pictures (image data) or connected to a digital camera or a cellular phone with the aid of a connecting means, whereupon the machine captures the pictures and an order screen appears on the display. Presented on the order screen are not only buttons for entering the print size, the number of prints, etc. but also the pictures that have been captured.

The customer uses the touch panel display and a predetermined entry procedure to enter various pieces of the necessary information including the pictures from which prints are to be prepared, the print size, the number of prints to be prepared from each picture. When the order becomes firm and an output instruction is issued, the images that have been ordered for printing are related to the order information including the print size and the number of prints to be prepared and the resulting data is sent to the server and the image processor in the photo lab, from which images are supplied to a digital photoprinter which then prepares and outputs prints in accordance with the order information.

Growing popularity in recent years is what is called "ordering via the Net", in which customers, with the aid of communication means such as the Internet, install photographic ordering software, browse or otherwise review the websites of photo labs, whereby the personal computer at the customer's home works as an order accepting machine so that particular images and order information are sent to a selected photo lab, asking it to prepare prints from the images.

In the conventional method of preparing prints from photographic films, an operator at the counter of a photo lab or the like accepts an order for print preparation, records the necessary items of information including the name of the customer (the person who placed the order for print preparation) and the contact information (e.g. the customer's address and phone number) on a dedicated bag called a DP bag, and puts the photographic films (in a cartridge, cassette, magazine or the like); after these preliminary steps, the operator takes the photographic films out of the DP bag, develops them, prepares (finished photographic) prints using the developed films, puts the prepared prints and developed films in the corresponding DP bag, and returns them to the customer.

In comparison, the method of preparing prints from pictures taken with a digital camera, a cell phone or the like features the absence of photographic films. As a result, the delivery operation is simplified and the process that starts with the preparation of prints and ends with their packaging can be automated such that the prints accommodated in a bag of enclosure which is sealed are offered as a print pack to the customer.

For example, JP 2003-35938 A discloses a digital photoprinter (photographic processor) that comprises an order information storage section for storing order information, an image data storage section for storing image data for preparing (photographic) prints, an image exposure section for exposing a photosensitive material on the basis of the stored image data, an order information control section which sends the order information, as converted to image data, to the image exposure section so that the photosensitive material is exposed to light bearing the order information to obtain an order information print, and a prints receiving means for accommodating prints and the order information print within a print accommodating bag, with optional provision of a mechanism for closing the print accommodating bag that accommodates the order information print and a predetermined number of prints.

As typically shown in JP 2003-35938 A, supra, the print pack under consideration is prepared by first accommodating one lot of prints for one order in a specified enclosure (bag) and then sealing (closing) the enclosure.

Needless to say, one enclosure and, hence, one print pack can accommodate only a limited number of prints.

On the other hand, the capacity of storage media of a built-in type in digital cameras or that of storage media of a type that is to be loaded in digital cameras is increasing so markedly in recent years that it is now possible to store a large number of pictures (photos), well exceeding several hundred, on a single storage medium. In the so-called "ordering via the Net", the number of prints that can be ordered at a time is by far greater than the capacity of the storage medium used.

In the case of accepting orders for preparing prints from the pictures recorded on storage media, all the pictures that have been ordered for printing at a time from one storage medium are generally handled as one order (i.e. one lot). In the case of ordering via the Net, all the pictures that have been ordered for printing through one ordering operation are handled as one order.

However, as already mentioned, it is now possible to store several hundred pictures on a single storage medium and in ordering via the Net, the number of prints that can be ordered at a time exceeds the capacity of the storage medium used. Hence, there are many conceivable cases where a customer places an order for preparing prints for one order that are too many to be accommodated in one print pack.

If an order is placed for preparing so many prints for one order or prints of one lot that they cannot be accommodated in one print pack, such prints for one order (of one lot) need to be accommodated in more than one print pack.

If more than one print pack results from a single order for prints, verification of print packs and picking up the right prints to be handed down to the customer (who placed the order for printing) are cumbersome and time-consuming and the handling efficiency becomes inevitably low.

In a method that one may adopt to solve this problem, the number of prints that can be ordered in one order (a single case) is determined by the number of prints that can be accommodated in one print pack so that if the former number exceeds the latter, the customer needs to perform another print order placing operation. However, this method inevitably requires extra time and effort on the side of the customer who is going to place a bulk order for prints, most probably discouraging the customer from trying to place print orders.

### SUMMARY OF THE INVENTION

The present invention has been accomplished under those circumstances and has as a general object providing a printing apparatus that prepares photographic or other kinds of prints from image data and accommodates each order or each lot of such prints in an enclosure to make a print pack. The apparatus is characterized in that it does not have to limit the number of prints that can be ordered in one order but can handle a bulk order as one order even if it amounts to several hundred prints; the apparatus is further characterized in that even if a bulk order requires the prints for one order or of one lot to be placed in more than one print pack, verification of prints (or print packs) and picking up the right prints can be easily performed.

In order to achieve the object, according to the present invention, there is provided a printing apparatus, including : an image forming section for recording image on a recording medium in accordance with image data and preparing prints that reproduce the image data; and a packer which gathers the prints prepared in the image forming section and packages them in a print pack or print packs, wherein the image forming section prepares for each print pack an order print that shows information relevant to a particular order and supplies the prints and the order print into the packer in such a way that an information recording side of the order print will be on top of any other prints in the print pack and in the case where the prints for one order are accommodated in print packs, distribution information showing that the prints for one order are distributed among the print packs is indicated on the order print, and wherein the packer feeds the prints into a packaging sheet comprising enclosures that connect together for a plurality of orders and thereafter seals and cuts the packaging sheet and in the case where the prints for one order are accommodated in print packs, the packer performs only sealing of each print pack and outputs the print packs for one order in a continuous form.

In the a printing apparatus according to the present invention, it is preferable that said packaging sheet is a tube comprising two longitudinal sheets bonded together at both edges in a transverse direction of said packaging sheet, said packaging sheet having cuts formed in one of said longitudinal sheets at given intervals extending in the transverse direction. Further, it is preferable that the packer, if it outputs the print packs for one order in the continuous form, adjacent print packs accommodating the prints for one order are incompletely cut apart by cutting apart the print packs under conditions that differ from the conditions used in an ordinary cutting process. Further, it is preferable that said packer heats and fuses said packaging sheet with a heating and fusing means to cut the print packs apart from one another, seal a preceding print pack, and form a lower end of a following print pack. Further, it is preferable that said packer switches between cutting and non-cutting of said packaging sheet by altering conditions of heating and fusing effected by said heating and fusing means. Further, it is preferable that said heating and fusing conditions are at least one of temperature of said heating and fusing, pressing force applied during said heating and fusing, and time of said heating and fusing. Further, it is preferable that said heating and fusing means cuts the packaging sheet at cuts formed therein, and seals said preceding print pack and forms the lower end of the following print pack by fusing the packaging sheet at locations above and below cuts. Further, it is preferable that said heating and fusing means comprises a projection extending in the transverse direction of said packaging sheet. Further, it is preferable that said heating and fusing means cuts said packaging sheet with said projection. Further, it is preferable that said projection and other areas than said projection of said heating and fusing means are controlled for heating independently of each other. Further, it is preferable that said distribution information indicates a total number of print packs of the one order. Further, it is preferable that said distribution information indicates a total number of print packs for one order and a sequence of the print packs in the one order. Further, it is preferable that said packer, prior to feeding the prints into said packaging sheet, widens a cut formed in said packaging sheet by inwardly moving portions near two a transverse direction sides of said packaging sheet. Furthermore, it is preferable that said packer, prior to feeding the prints into said packaging sheet, and after widening a cut formed in said packaging sheet, causes air to be blown into said packaging sheet.

The printing apparatus of the present invention prepares photographic or other kinds of prints (in hard copy) from image data and accommodates each order or each lot of such prints in an enclosure to make a print pack. The apparatus is characterized in that even if a bulk order is placed for making several hundred prints in one order, causing the need to accommodate the prints in more than one print pack, verification of the prints (print packs) and picking up the right prints can be easily accomplished.

As a further advantage, every print order can be handled as one order no matter how many prints need to be prepared and, hence, the printing apparatus of the present invention can accept a bulk order without taking any extra time and effort on the side of the customer, who will therefore not be discouraged from placing print orders for the reason that the print order placing operation is cumbersome and time-consuming.

### BRIEF DESCRIPTION OF THE DRAWINGS

Fig. 1 shows in concept an example of the printing apparatus of the present invention;
Fig. 2 shows in concept an example of a print pack (A) or print packs (B), as prepared by the printing apparatus of the present invention;
Fig. 3A is a partially enlarged front view showing the packer in the printing apparatus shown in Fig. 1;
Fig. 3B is a plan view of the packer in Fig. 3A; and
Fig. 4 is a perspective view showing an outline of an exemplary enclosing sheet, which will be processed into print packs.

### DETAILED DESCRIPTION OF THE INVETNION

On the following pages, the printing apparatus of the present invention is described in detail with reference to the preferred embodiments shown in the attached drawings.

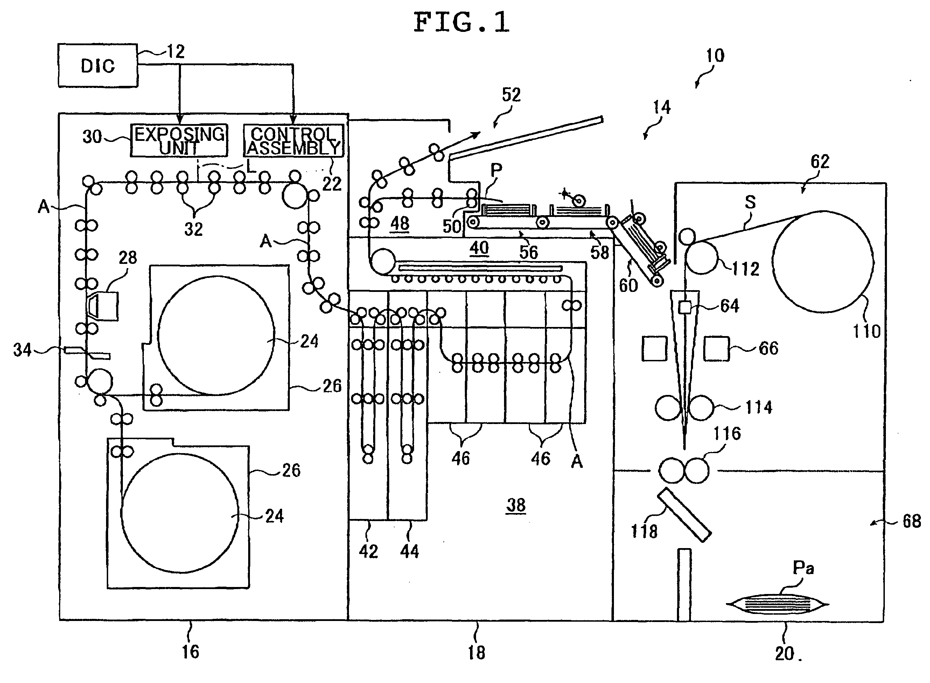

Fig. 1 shows an outline of a print system that utilizes the printing apparatus of the present invention.

The print system generally indicated by 10 in Fig. 1 acquires the picture (image data) taken with a digital camera, a cellular phone or the like; it exposes a photosensitive material A (printing paper) to a light beam as modulated in accordance with the picture, thereby forming a latent image, and performs specified development and subsequent processing on the exposed photosensitive material A to prepare a (finished photographic) print P; a plurality of prints P are packaged in a bag of enclosure for each order to make a print pack Pa.

In the illustrated case, the print system 10 includes a digital image controller 12 (DIC 12) and a printer 14. The printer 14 in turn includes an exposing assembly 16, a processor 18, a packer 20, and a control assembly 22. Although not explained specifically, the photosensitive material A is transported to various sites in the printer 14 by known transport means such as transport roller pairs and guides.

DIC 12 may typically comprise a computer, to which the aforementioned print order accepting machines (print order accepting terminals) that are installed at photo labs or within various other commercial facilities, customers' personal computers (and the server to which they are connected), the image data base and image server owned by the photo lab, etc. are connected by known communication means such as the internet and LANs (local area networks).

From these devices it is connected to, DIC 12 is supplied with the pictures (their image data) that have been ordered for printing and the order information for each case of print order (order for preparing prints).

Alternatively, DIC 12 may acquire the pictures and order information as from an image reading device such as a scanner which reads photoelectrically the pictures recorded on films or from an image processing device which performs specified image processing on the pictures read by means of the image reading device. If desired, the order information may be entered by an input means such as a keyboard on DIC 12.

The order information comprises various kinds of information concerning the order for making prints of a particular order case, as exemplified by the contents of the print order such as the print size and the number of prints to be prepared.

Specific examples include various kinds of information essential to the preparation of prints, as exemplified by the order number (identifying information, or order ID) of the print order, the number of prints to be made from each image, print size, the information about how prints should be finished (whether in high quality or in normal way), and the paper surface of prints (if this is selectable), as well as optional pieces of information such as the print fee, the date and time of print order (the date and time when the print order was accepted), the due date (the date and time when prints are to be finished), and the information about the customer (who placed the print order) such as the identification information (customer ID), address, name, age, phone number, etc.

When supplied with the images and order information, DIC 12 performs image processing in accordance with the order information and any other necessary image processing steps on each image to produce images (image data) that are associated with image recording in the printer 14 (exposing assembly 16). In addition, DIC 12 generates an image for an order print (the image data for generating an order print) from the order information for each order of prints that have been ordered for preparation.

Hereinafter, for the sake of convenience, the images ordered for printing shall be called product images, the prints of product images shall be called product prints, and the image for an order print shall be called an order print image.

The order print is a print which carries various kinds of information concerning the order for making prints of a particular order case for the purposes of searching for and verifying the right print pack or packs Pa.

The information to be carried on the order print is not limited in any particular way and may be exemplified by various kinds of information concerning the order for making prints of a particular case. Illustrative examples include the order number, the date and time of order, the due date, the print fee, the number of prints, print size, the information about how prints should be finished, the paper surface of prints, various kinds of information about the customer such as his or her name, the trade name, various kinds of information about advertisement, photo lab, etc., and a bar code representing one or more of these pieces of information.

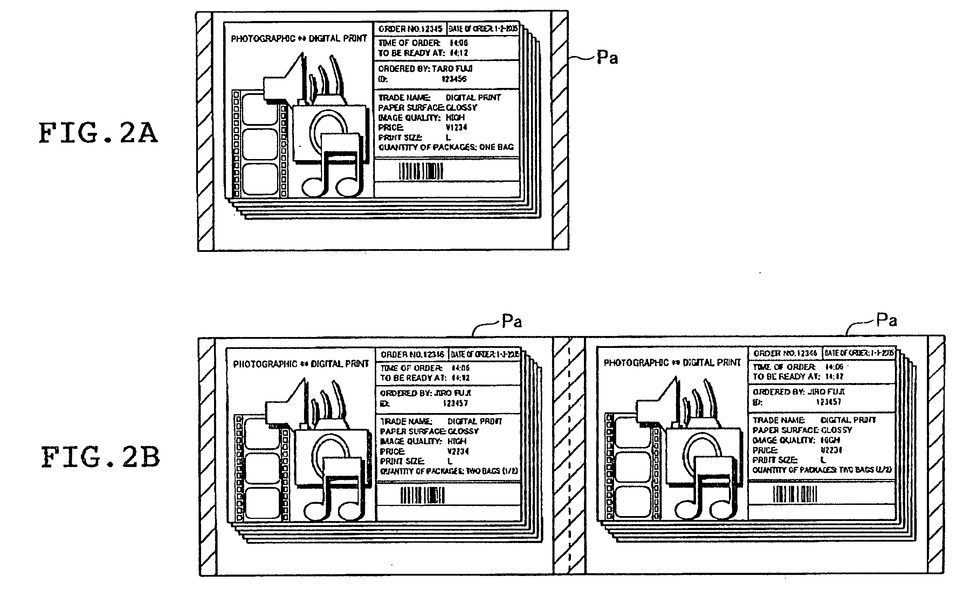

Fig. 2 shows an exemplary case. The order prints shown in Fig. 2 carry the order number (Order no.), the order date and time (the time and date when the order was placed), the due date (the time when prints are to be ready), the name of the customer (who placed the order) and the customer ID, the trade name, the paper surface of prints, the information about how prints should be finished (the required image quality), the print fee (the amount payable), and the print size.

In the case under consideration, the print pack Pa can accommodate only a limited number of prints.

In the illustrated example of print system 10, no limit is placed on the number of prints that can be prepared in one order and if the number of prints that have been ordered in one order exceeds the maximum number of prints that can be accommodated in one print pack Pa, the prints for one order are distributed among a plurality of print packs Pa, into which they are accommodated and outputted from the print system 10.

Needless to say, the maximum number of prints that can be accommodated in one print pack Pa is known and preset in DIC 12 as well.

If the number of prints that have been ordered in one order exceeds the maximum number of prints that can be accommodated in one print pack Pa, DIC 12 sets the relevant information and the like such that the prints of a particular order case will be accommodated within a plurality of print packs Pa; at the same time, an order print image is prepared in association with each of the print packs Pa. In other words, an order print image is prepared for each print pack Pa.

In the illustrated example, the order print records the number of print packs (the quantity of packages) for each order or each case irrespective of whether it outputs one print pack Pa or yields more than one pack Pa. Hence, by looking at the number of print packs that is recorded on the order print, the operator can easily recognize that the prints of a particular case are distributed among a plurality of print packs.

By thus recording a piece of information on the order print that shows that the prints of a particular case are distributed among a plurality of print packs Pa, there is offered an advantage in the case of a bulk order that requires more than one print pack Pa; that is, the operator can easily verify and search for the right print packs Pa, thereby ensuring that the handling efficiency at photo labs and other facilities will not be reduced even if the prints for one order are distributed among a plurality of print packs.

In the present invention, the piece of information that is to be recorded on each order print to show that the prints of a particular order or a particular case are distributed among a plurality of print packs Pa is by no means limited to the total number of print packs Pa for each case. If desired, the total number of print packs Pa for a particular case may be successively combined with the numbers assigned to the individual print packs Pa, as exemplified by 1/3, 2/3 and 3/3 with the numeral 3 referring to the total number of print packs Pa. In the example shown in Fig. 2B for the case where more than one pack Pa is outputted, the order print shows not only the quantity of packages but also the total number of print packs Pa in combination with the numbers assigned to the individual print packs Pa. However, this is not the sole case of the present invention and either piece of information may be omitted.

The piece of information that is recorded on the order print to show that the prints of a particular case are distributed among a plurality of print packs Pa may be represented in a bar code or various kinds of symbols rather than in characters; alternatively, the information may be recorded in both characters and a bar code.

Further, the number of print packs Pa or other piece of information that shows that the prints of a particular case are distributed among a plurality of print packs Pa need not be recorded on the order prints of all cases but may be recorded on the order prints for only those cases in which the prints for one order are distributed among a plurality of print packs Pa.

DIC 12 performs image processing on each image and it also generates an order print image; then, for each order, DIC 12 relates the order information to the images (the product images and the order print image) and sends these images to the printer 14. DIC 12 also relates the order information to the information about the number of print packs for the case of interest and sends it to the printer 14. Furthermore, DIC 12 generates sorting information in relation to the images for one print pack and sends it to the printer 14. It should be noted here that in the present invention, the information about the number of print packs Pa need not be sent to the printer 14 in all orders (i.e. all cases); for example, it need not be sent to the printer 14 in a case where the prints for one order are accommodated in one print pack Pa but it may be sent to the printer 14 only in those cases where the prints for one order are distributed among a plurality of print packs Pa.

In the case under consideration, the images are sent in such a sequence that the order print is positioned on top of any other prints in a print pack Pa. As will be described later in this specification, the prints traveling through the printer 14 are fed into a packaging enclosure sheet S as they are stacked with the image bearing surface of each print facingupward; therefore, the images of each case are supplied into the printer such that the order print presents the last image in the print pack Pa.

As already mentioned, the printer 14 in the print system 10 comprises the exposing assembly 16, the processor 18, the packer 20, and the control assembly 22.

The control assembly 22 controls the driving and action of each site in the printer 14.

The control assembly 22 also receives the order information and the information about the number of print packs for each case from DIC 12 and supplies the necessary information to the packer 20 and various other sites.

The exposing assembly 16 cuts the photosensitive material A to a size that allows for prints to be prepared, records a back print on the cut sheet of photosensitive material A, exposes the photosensitive material A to a light beam L modulated in accordance with the product images and the order print image sent from the DIC 12, thereby recording a latent image, and then supplies the exposed photosensitive material A into the processor 18 (a developing section 38).

The exposing assembly 16 has a magazine 26 loaded in a specified position to accommodate a roll 24 of the photosensitive material A; it also comprises a back printer 28, an exposing unit 30, and two auxiliary scan transport roller pairs 32.

The illustrated printer 10 is so adapted that it can be loaded with two magazines 26. The photosensitive material A is drawn out of either magazine 26 and cut by a cutter 34 in accordance with the print size; thereafter, the photosensitive material A is subjected to back printing with the back printer 28 and supplied into the auxiliary scan transport roller pairs 32.

The exposing unit 30 is supplied with the product images and the order print image (their image data).

The exposing unit 30 is a known light beam scanning optical system that has a light source, a light deflector, an fθ lens, an optical path adjusting lens, etc. and by which a light beam modulated in accordance with the image or images to be recorded is deflected in a predetermined direction (a main scanning direction) to strike a predetermined exposing position.

In the exposing unit 30, the light beam L modulated in accordance with the product images or the order print image is deflected in the main scanning direction to strike the predetermined exposing position. The photosensitive material A is transported in an auxiliary scanning direction perpendicular to the main scanning direction and in register with the predetermined exposing position by means of the auxiliary scan transport roller pairs 32 located on opposite sides of the exposing position in the direction of its transport. As a result, the photosensitive material A is exposed by two-dimensional scanning with the imagewise modulated light beam L, whereupon a latent image is recorded on its entire surface.

Note that the individual sheets of the photosensitive material A are exposed in such a manner that the order print will be on the top of the stack in a print pack. The prints P traveling through the printer 14 are fed into an enclosure sheet S as they are stacked with the image bearing surface of each print facing upward. Therefore, the sequence of exposing the individual sheets of photosensitive material A is such that after all of the product images in one print pack Pa have been exposed, the order print image is exposed.

As already mentioned, the order print (or the photosensitive material A from which the order print is made) records not only various kinds of information including the order information and the order date and time but also the number of print packs (the quantity of packages) of a particular case.

The photosensitive material A which has a latent image recorded thereon by means of the exposing unit 30 and the auxiliary scan transport roller pairs 32 is subsequently supplied into the processor 18.

The processor 18 comprises the developing section 38 and a drying section 40.

The photosensitive material A that has a latent image formed in the exposing assembly 16 and which has been supplied into the processor 18 first enters the developing section 38 where it is developed in a developing tank 42 to render the latent image visible; the photosensitive material A then goes into a bleach-fixing tank 44 where the visible image is bleached and fixed; thereafter, the photosensitive material A is successively washed in four washing tanks 46 and transported into the drying section 40.

The sheets of developed photosensitive material A are then dried in the drying section 40 with a heater, warm air or some other means and discharged as prints P (product prints and an order print) from a discharging section 48 through an exit roller pair 50 into the packer 20 (more specifically a collecting section 56).

Note that prints P that are too large to be accommodated in a print pack are not transported into the packer 20 but are discharged into a large-size print discharging section 52 that is positioned upward of the discharging section 48. Transport path switching between the two discharging sections may be realized by any known method such as by using a switch guide.

The packer 20 collects the prints P and puts them into an enclosure to make a print pack P in accordance with the order information. Having this function, the packer 20 comprises the collecting section 56, a transport section 58, a feeding section 60, a sheet supply section 62 for supplying the packaging enclosure sheet S, an opening providing means 64, a seal-and-cut means 66, and a product accommodating section 68.

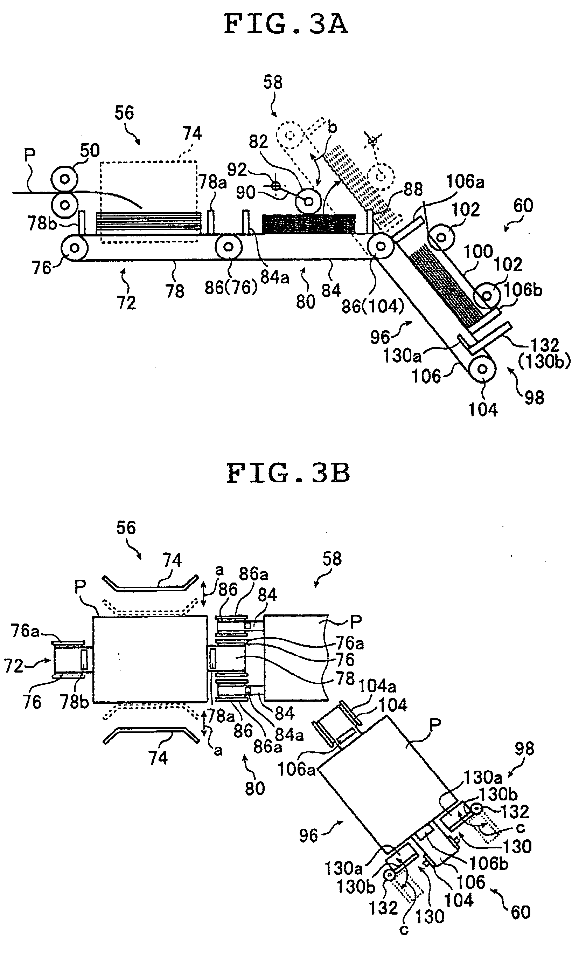

Fig. 3 shows an outline of the collecting section 56, the transport section 58, and the feeding section 60.

Fig. 3A is a front view (as seen from the same direction as is Fig. 1) and Fig. 3B is a plan view.

The collecting section 56 collects the prints P as have been discharged through the exit roller pair 50; at the same time, it rearranges the prints P in a direction perpendicular to the direction of their transport (which is hereinafter referred to as the transverse direction) and transports them to the downstream transport section 58.

In the illustrated example, the collecting section 56 has a conveyor 72 and width-adjusting guides 74 (indicated by a dashed line in Fig. 3A).

The conveyor 72 is a known belt conveyor consisting of a pair of rollers 76 and an endless belt 78 stretched between these rollers 76 and it transports the collected prints P to the downstream transport section 58. Each of the rollers 76 is axially supported on support plates 76a (which are omitted from Fig. 3A for structural clarity and so are the other support plates). As one can see from Fig. 1, the prints P are collected with their image bearing side facing up. As already mentioned, the print stack which is to be fed into the packaging sheet S has the order print on the top.

In order that the prints P emerging from the exit roller pair 50 will be discharged and collected on the endless belt 78, the conveyor 72 is positioned downward of the exit roller pair 50 in a vertical direction whereas in the direction of transport of the prints P, the upstream roller 76 is in substantially the same position as but slightly downstream of the exit roller pair 50. In order to ensure positive action of the width-adjusting guides 74, the width of the endless belt 78 is smaller than the minimum size of the corresponding print P in the transverse direction.

In order to ensure that the print P emerging from the exit roller pair 50 will stop at a predetermined position and will not go farther downstream, the conveyor 72 in the collecting section 56 preferably has a projection, wall or other regulating member 78a provided on the surface of the endless belt 78 which, when the prints P are emerging from the exit roller pair 50, will be positioned downstream of the position at which they are discharged (collected).

It is also preferred, in order to ensure more positive transport of the prints P by the conveyor 72, to provide a projection, wall or other depressing member 78b on the surface of the endless belt 78 which, when the prints P are emerging from the exit roller pair 50, will be positioned upstream of the position at which the prints P are discharged through the exit roller pair 50 (or the position at which the prints P are collected).

The width-adjusting guides 74 are guide members in plate form that consist of two plates positioned on opposite sides of the conveyor 72 in the transverse direction.

The two width-adjusting guides 74 reciprocate synchronously in the direction indicated by the two-head arrows "a" in Fig. 3B by any known means such as a motor. The reciprocating width-adjusting guides 74 move closer to each other in the transverse direction as indicated by the dashed lines in Fig. 3B so that they come into contact with the sides of the prints P in the transverse direction as have been discharged and collected on the conveyor 72, whereby the prints P emerging from the exit roller pair 50 are regulated in their transverse position (moved in the transverse direction) and the collected prints P are rearranged in the transverse direction (adjusted widthwise).

The timing on which the width-adjusting guides 74 are driven in the collecting section 56 (namely, the timing on which the prints P are rearranged in the transverse direction) is not limited in any particular way and after a predetermined number of prints P that depends on how many prints P in stack can be moved have been discharged and collected, the width-adjusting guides 74 may be driven to rearrange those prints P before the next print P is discharged.

Considering the burden that will be imposed on the prints P, the holding force of the width-adjusting guides 74 is preferably small. In particular, photographic prints in the illustrated example have a comparatively large friction coefficient on their surface, so if too many prints are stacked, an unduly great force will be required to perform effective width adjustment. In addition, the prints can be rearranged more positively and orderly by performing widthwise adjustment each time a small enough number of prints are collected.

Considering these points, it is preferred for the collecting section 56 that the width-adjusting guides 74 be driven to rearrange the prints P each time an appropriately determined number of prints P which is not more than five have been discharged; more preferably, the width-adjusting guides 74 are driven to rearrange the prints P each time two prints, most preferably one print, has been discharged.

The transport section 58 is a site that receives the print stack, or the stack of prints P as have been collected and rearranged in the transverse direction by the collecting section 56, and which transports the print stack to the downstream feeding section 60. Having this function, the transport section 58 has conveyors 80, a curl-flattening roller 82, and a means (not shown) for oscillating the conveyors 80.

The conveyor 80 is a known belt conveyor which consists of an endless belt 84 and a pair of rollers 86 between which the belt 84 is stretched. Each of the rollers 86 is axially supported on support plates 86a. In the illustrated example, the transport section 58 has two conveyors 80 that are positioned on the sides of the conveyor 72 in the transverse direction in the collecting section 56 in such a way that the rotating axis of the roller 76 downstream of the conveyor 72 and the rotating axis of each of the rollers 86 upstream of the conveyor 80 are aligned in a line that extends in the transverse direction. As a result, the transport region in the collecting section 56 overlaps the transport region in the transport section 58, ensuring that the print stack is transported positively from the collecting section 56 to the transport section 58. Note that the support plates 86a for each of the two conveyors 80 are integral to each other.

It should also be noted that the conveyor 72 in the collecting section 56 and the conveyors 80 are positioned in such a way that the transport path in the collecting section 56 aligns linearly with the transport path in the transport section 58 when the print stack is transported from the former to the latter.

As will be described later in this specification, when the print stack is transported into the feeding section 60, the upstream end of each conveyor 80 is raised so that it is inclined downward in the direction of transport (as indicated by the dashed lines in Fig. 3A).

In this case, in order to ensure that the print stack will not collapse in the direction of transport, a wall 88 is erected on the surface of the endless belt 84 of each conveyor 80, with the height of the wall 88 being determined by various factors including the maximum number of prints P that can be accommodated in one print pack Pa. The transport section 58 receives the print stack from the collecting section 56. When the print stack is transported into the transport section 58, each of the conveyors 80 in the transport section 58 is driven in such a controlled manner that at the time the print stack starts to be transported into the transport section 58, the wall 88 is located downstream of the print stack but at the time the transport of the print stack into the transport section 58 ends, the wall 88 comes to be situated above the conveyor 80.

Like the conveyor 72 in the collecting section 56, in order that the print stack is transported more positively, the surface of each endless belt 84 preferably has a projection, a wall or other pushing member 84a that will be situated upstream of the print stack at the time the whole of it sits on the conveyor 80.

The as-dried print P typically curls downward in such a way that the image bearing side caves in (to form a trough). In addition, as already mentioned, the prints P are ejected from the discharging section 48 into the collecting section 56 with their image bearing side facing up.

The curl-flattening roller 82 is provided as a preferred embodiment of the present invention and depresses the print stack from above so that the curl of each print P is flattened out to straighten the print P.

In the illustrated example, the curl-flattening roller 82 is axially supported on an end of a rod-shaped arm 90. The arm 90 is supported to be capable of oscillating on an axis 92 at the other end which is away from the curl-flattening roller 82; by oscillating the arm 90 with a drive source (not shown), the curl-flattening roller 82 pivots to move up and down as indicated by the two-head arrow "b" in Fig. 3A.

Before the print stack is transported from the collecting section 56 into the transport section 58, the curl-flattening roller 82 has been moved upward. When the print stack is transported from the collecting section 56 into the transport section 58, the curl-flattening roller 82 is moved downward to depress the print stack from above to remove its curl.

Note that the curl-flattening roller 82 may be a driven roller or a drive roller which rotates in synchronism with the transport of the print stack into the feeding section 60 which is to be described later in this specification.

Each of the conveyors 80 in the transport section 58 is adapted to be capable of oscillating about the rotating axis of the downstream roller 86; if, for example, the upstream roller 86 is lifted by a drive source (not shown), the conveyor 80 is inclined in such a way that its downstream end is at the lower position as indicated by the dashed lines in Fig. 3A, whereupon it is inclined by the same (or substantially the same) angle as a conveyor 96 in the feeding section 60 to be described later. Note that in synchronism with this oscillation of each conveyor 80, the curl-flattening roller 82 also moves so that it keeps depressing the print stack even when the conveyor 80 is in an inclined state. In addition, as will be described later, each conveyor 80 and the conveyor 96 in the feeding section 60 are positioned in such a way that the rotating axes of the two rollers are aligned linearly and, hence, the overall transport path becomes linear at the time when the two conveyors form the same angle with the horizontal.

The transport section 58 receives the print stack from the collecting section 56 with the conveyors 80 being held in a level state; thereafter, the upstream end of each conveyor 80 is raised so that it is inclined by the same angle as the conveyor 96 in the feeding section 60, and the print stack is transported into the feeding section 60 as the conveyor 96 forms a flat plane in combination with the conveyors 80. As a result, the transport section 58 transports the print stack into the feeding section 60 through the linear transport path as it slides down at (substantially) the same angle from the transport section 58 into the feeding section 60.

In this way, the direction of transport through the transport section 58 is aligned linearly with the direction of transport through the feeding section 60, thus ensuring that the print stack will not collapse while it is transported from the transport section 58 into the feeding section 60.

In the feeding section 60, the print stack it has received from the transport section 58 slides down at an angle with respect to the horizontal so that it is fed into the packaging sheet S.

In the illustrated example, the feeding section 60 has the conveyor 96, a shutter 98, a guide plate 100, and two curl-flattening rollers 102 that are axially supported on the guide plate 100.

The conveyor 96 is a belt conveyor which consists of a pair of rollers 104, an endless belt 106 that is stretched between the rollers 104, as well as a pushing member 106a and a wall 106b that are erected on the surface of the endless belt 106; the conveyor 96 is so positioned that it is inclined downward in the direction of transport.

Each of the rollers 104 is axially supported on support plates 104a which are of the same type as the aforementioned support plates 76a and 86a. As in the aforementioned collecting section 56 and the transport section 58, the conveyor 96 lies between the two conveyors 80 in such a way that the rotating axis of the roller 104 upstream of the conveyor 96 in the feeding section 60 and the rotating axis of each of the rollers 86 downstream of the conveyors 80 in the transport section 58 are aligned in a line that extends in the transverse direction. As a result, the transport region in the transport section 58 (each of the conveyors 80) overlaps the transport region in the feeding section 60 (the conveyor 96), ensuring positive transport of the print stack while at the same time, the transport path in the transport section 58 aligns linearly in a more preferred way with the transport path in the feeding section 60.

In the illustrated example of the printer 10, the above-described downwardly inclined transport , as combined with a drop under gravity, causes the print stack to be fed into the packaging sheet S as it is guided by the shutter 98 to be described later (in particular, doors 130).

In the illustrated example, the pushing member 106a in the form of a prism (wall) is erected on the surface of the endless belt 106 of the conveyor 96 as a preferred embodiment of the present invention. The pushing member 106a pushes the upstream end of the print stack so it slides downward on the conveyor 96 in the direction of its transport as it is fed into the packaging sheet S.

Having this pushing member 106a (pushing means), the conveyor 96 ensures that the print stack can be transported through the feeding section 60 and fed into the packaging sheet S in a more orderly and positive manner.

The height of the pushing member 106a is not limited to any particular value. However, in order to ensure that all of the prints P in the print stack are pushed positively, the pushing member 106a preferably has a height greater than the maximum thickness of the print stack which is determined by various factors including the maximum number of the prints P that can be accommodated in one print pack Pa. If a member that regulates the height of the print stack as exemplified by the guide plate 100 in the illustrated example of the feeding section 60 to regulate the height of the print stack by flattening the curl of each print P, the height of the pushing member 106a may be set to be greater than that of the print stack's height regulating member.

The shape of the pushing member 106a also is not limited in any particular way and aside from the prismatic (wall) shape used in the illustrated example, various other shapes can be adopted, including a bar (column).

The conveyor 96 in the feeding section 60 also has the wall 106b erected on the surface of the endless belt 106 in order to prevent the collapse and untimely drop of the transported print stack. The height of the wall 106b may be determined in the same manner as the pushing member 106a.

In the conveyor 96 of the feeding section 60, the positions of the pushing member 106a and the wall 106b are determined and the drive of the conveyor 96 is controlled in such a manner that when it receives the print stack from the transport section 58, the pushing member 106a will not get in the way of the print stack whereas the wall 106b is located downstream of the print stack (preferably in contact with the leading end face of the print stack) but at the time the transport of the print stack into the feeding section 60 ends, the pushing member 106a is located upstream of the print stack whereas both the pushing member 106a and the wall 106b are situated above the conveyor 96.

Preferably, the positions of the pushing members 84a and 106a are determined and the drive of the conveyors 80 and 96 is controlled in such a manner that as soon as (or slightly after) the pushing member 84a moves from above to below the conveyor 80 in the transport section 58, the pushing member 106a will move from below to above the conveyor 96.

The speed at which the print stack is transported by the conveyor 96 (in the feeding section 60) so that it is fed into the packaging sheet S is not limited in any particular way; however, it should preferably be equal to or greater than the speed at which the print stack on the conveyor 96 will drop under gravity.

This ensures more positive prevention of the print stack from dropping under gravity to collapse in a downstream direction while it is fed into the packaging sheet S, so that it can be fed into the packaging sheet S more positively in a more orderly state. In addition, even if the upper prints in the print stack cannot keep pace with the transport speed of the conveyor 96 so that they begin to collapse in an upstream direction, they will be held back by the aforementioned pushing member 106a to be transported positively and again the print stack can be fed into the packaging sheet S more positively in a more orderly state.

The transport speed of the conveyor 96 does not have any particular upper limit.

However, if the transport speed of the print stack, namely, the speed at which it is fed into the packaging sheet S (enclosure) is unduly fast, the print stack is fed into the packaging sheet S with such a great force that it might potentially damage the enclosing sheet S or it may bounce back from the bottom and the like of the packaging sheet S so that some prints may potentially fly out.

Considering these points, the transport speed of the conveyor 96 is preferably set in a range of about 1 to 2,000 mm/s.

The angle of the conveyor 96 (the angle it forms with the horizontal), namely, the angle at which the print stack is oriented with respect to the packaging sheet S when it is fed into the latter (this angle may be called the angle of depression or the descending vertical angle) is not limited to any particular value, either, and any angle may be adopted as long as it allows the print stack to be fed into the packaging sheet S as it slides down at an angle with the horizontal.

However, if the angle of the conveyor 96 with the horizontal is unduly small, the print stack will bump against the surface of the packaging sheet S to upset its posture, potentially preventing the print stack from being fed into the packaging sheet S in a consistent manner.

Considering these points, the angle at which the conveyor 96 is inclined to let the print stack be fed into the packaging sheet S is preferably in a range of 45 to 90°, more preferably in a range of 50 to 90°.

The guide plate 100 is a member in plate form that is spaced from the endless belt 106 by a distance determined by the maximum height of the print stack which takes into account the maximum number of the prints in the print stack and their curl.

In the illustrated example, the guide plate 100 has such a shape that the portion closer to the upstream end (through which the print stack is fed in) gently slopes downward to connect to a portion that is parallel to the transport surface of the conveyor 96. Note that the guide plate 100 has an opening that is formed in the central part in the transverse direction and through which the pushing member 106a and the wall 106b will pass.

The guide plate 100 has three functions to perform: first, it regulates the height of the print stack as has been transported into the feeding section 60 by contacting its top; secondly, it axially supports the curl-flattening rollers 102; thirdly, it guides the print stack to come under the upstream curl-flattening roller 102 as it has been transported from the transport section 58. As already mentioned, each print P curls downward so it caves in, so the guide plate 100 contacts the two ends of the topmost print P in the transverse direction. Therefore, the guide plate 100 will never damage the image bearing side or any other parts of the print P to reduce its commercial quality.

Like the aforementioned curl-flattening roller 82, the curl-flattening rollers 102 depress the print stack from above so that the curl of the prints is flattened out to straighten them. Note that the curl-flattening rollers 102 are provided as a preferred embodiment of the present invention and may be omitted if the paper quality and other features of the prints P are such that they will undergo only a small amount of curl.

The shutter 98 mainly works as a guide member which guides the print stack in the transverse direction and in the direction it drops when it is fed into the packaging sheet S.

In the illustrated example, the shutter 98 is composed of two doors 130 that are each axially supported at an end in the transverse direction and which open from the center outward to both sides as indicated by the two-head arrows "c" in Fig. 3B.

Each of the doors 130 is a member in plate form that has a generally L-shaped cross section when it is seen from the direction of transport in an open state and it has two parts, a bottom 130 that supports (guides) the print stack from below as it is fed into the packaging sheet S and a sidewall 130b that is erected vertically from the bottom 130a.

The base end of each door 130 (the outer end in the transverse direction in a closed state/the upstream end in the direction of transport in an open state) has a cylindrical prop 132 fixed thereto and this prop 132 is axially supported so that it can rotate about a longitudinal axis through the center. It should also be noted that the props 132 are positioned outside the transport path of the print stack in the transverse direction.

In its ordinary state, the shutter 98 closes the transport path of the print stack with the sidewalls 130b of the two doors 130 as indicated by the solid lines in Fig. 3B. On the other hand, when the print stack is fed into the packaging sheet S, the props 132 rotate about the longitudinal axes through the center so that the two doors 130 swing from the center outward to open the shutter 98.

Thus, when the print stack is fed into the packaging sheet S, the bottom 130a works as a guide member that supports the print stack from below (so that it prevents untimely drop of the print stack and guides it to travel in the direction it is to be fed in) whereas the sidewall 130b works as a member that guides the print stack in the transverse direction.

In the packer 20, the feeding section 60 and the sheet supply section 62 are so composed that when the shutter 98 is opened with a cut "c" (to be described later, through which the print stack is fed in) being widened to provide an opening, the opening ends of the doors 130 will be inserted into the cut "c" (i.e., opening of the shutter 98 causes the opening ends of the doors 130 to be inserted into the enclosure).

As a result, the shutter 98 can function as a guide in a more advantageous manner.

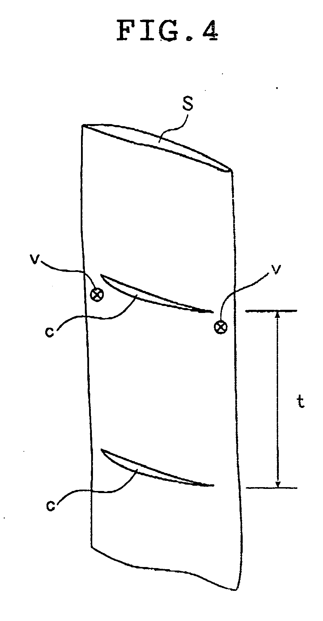

As shown in Fig. 4, the packaging sheet S is a transparent tube which consists of two webs of sheet which are bonded together at the longitudinal edges. The packaging sheet S has a plurality of cuts "c" that are formed in one side at an interval of "t" in correspondence to the length of one print pack Pa and which extend in a direction perpendicular to the longitudinal direction.

In the sheet supply section 62, the packaging sheet S is wound up as a sheet roll 110 and loaded in such an orientation that the side having the cuts "c" is directed toward the feeding section 60; the loaded packaging sheet S is transported in a predetermined path by various means including a guide roller pair 112 and a transport roller pair 114.

The transport of the packaging sheet S stops at the time when one of the cuts "c" comes to a predetermined position that enables the feeding of the print stack from the feeding section 60, such as where the cut "c" is somewhat below the lower end of the feeding section 60.

The opening providing means 64 serves to widen the cut "c" in the packaging sheet S in preparation for the print stack to be fed into the packaging sheet S (print pack Pa).

Suppose that the cut "c" is in the aforementioned specific position that enables the feeding of the print stack from the feeding section 60. In the illustrated example, the opening providing means 64 may hold the packaging sheet S by pinching their two constituent webs at positions just beneath the cut "c" and near the two opposite longitudinal sides of the packaging sheet S (such as the positions indicated by "v" in Fig. 4) and the opening providing means 64 is then moved inward to widen the cut "c".

The means for widening the cut "c" is in no way limited to the aforementioned example and various known means may be adopted, including a method comprising pulling suckers attached to areas under the cut "c" so that it is widened and a method of widening the cut "c" using a suitable tool.

After thus widening the cut "c" in the packaging sheet S, wind, typically from a fan is preferably blown from above into the cut "c" so as to increase the degree of its opening and inflate the packaging sheet S.

In this case, the wind typically from a fan may be blown from above into the cut "c" as it forms a small angle with the packaging sheet S rather than being parallel to it and this is more preferred for the purpose of increasing the degree of its opening and inflating the packaging sheet S.

With the cut "c" being thus widened by the opening providing means 64 and also with the lower end being sealed as will be described later, the packaging sheet S stands by as it is suspended from the guide roller pair 112 with its lower part being guided by the transport roller pair 114.

As already mentioned, the prints P that have been transported through the discharging section 48 pass through the exit roller pair 50 to be discharged and collected in the collecting section 56 (on the conveyor 72). In the collecting section 56, the width-adjusting guides 74 are moved inward on a predetermined timing, say, each time one print P is discharged, so that the prints P are collected in register in the transverse direction.

In the packer 20, the sort information supplied from the DIC 12, the counted number of prints, or any other information may be used to detect the fact that all of the prints S to be accommodated in one print pack Pa (i.e., the product prints and the order print) have been collected in the collecting section 56 and when this detection is effected, the conveyor 72 in the collecting section 56 and the conveyors 80 in the transport section 58 are driven in synchronism so that the print stack is transported from the collecting section 56 to the transport section 58.

When the print stack has been transported into the transport section 58, the curl-flattening roller 82 is moved downward so that the print stack is depressed from above to flatten the curl of each print; then, the upstream rollers 86 are raised to bring the conveyor 80 into an inclined state as indicated by the dashed lines in Fig. 3A.

When the conveyors 80 in the transport section 58 are inclined by the same angle as the conveyor 96 in the feeding section 60, the two doors 130 of the shutter 98 are opened outward. As already mentioned, this movement causes the opening end of each door 130 to be inserted into the packaging sheet S. It has also been mentioned before that by opening the double doors 130 outward, their opening ends can be inserted into the packaging sheet S in a positive and smooth manner.

Subsequently, the conveyors 80 and the conveyor 96 are driven in synchronism so that the print stack is transported from the transport section 59 into the feeding section 60, in which the print stack is transported downward at an angle until it is fed through the wide-open cut "c" into the packaging sheet S. On this occasion, the opening ends of the doors 130 are within the packaging sheet S, with the bottom 130a of each door 130 guiding the print stack from below and the sidewall 130b guiding the print stack in the transverse direction; as a result, the print stack can be fed into the packaging sheet S in a positive and orderly manner.

When the prints P for one print pack Pa have been put into the packaging sheet S, the opening providing means 64 releases the packaging sheet S (and, if necessary, the fan is stopped); subsequently, the sheet roll 110, the guide roller pair 112 and the like are rotated so that the packaging sheet S is supplied to the position where the cut "c" reaches the seal-and-cut means 66.

The seal-and-cut means 66 serves two functions: first, it closes the packaging sheet S by fusing together (heat sealing) the two constituent webs of sheet with heat, typically from a heater; second, it thermally cuts the enclosing sheet S into separate print packs Pa.

In the illustrated example, the heater as the seal-and-cut means 66 has a tiny projection at the center (in the direction of transport of the packaging sheet S) which extends in the transverse direction.

The above-described supply of the packaging sheet S stops at the position where the projection at the center of the heater coincides with the cut "c". Then, the heater as the seal-and-cut means 66 is depressed onto the packaging sheet S so that the sheet is sealed (closed) both above and below the cut "c" and the central projection cuts (fuses apart) the packaging sheet S along the cut "c".

As a result, the lower end of the packaging sheet S for accommodating the prints P (at which it connects to the sheet roll 110) is closed and, at the same time, the upper end of the packaging sheet S accommodating one lot of prints P for one order is closed and cut off, whereby one complete print pack Pa is produced.

The print pack Pa accommodating one lot of prints P for one order is transported downward by means of the transport roller pair 114 and another transport roller pair 116, through which it is guided by a guide 118 to be accommodated in the product accommodating section 68.

As already mentioned, the printer 10 has been supplied from the DIC 12 with information about the number of print packs Pa to be prepared for each case.

The packer 20 performs in different ways depending on the order. In a case where prints P for one order are accommodated in two or more print packs Pa, two adjacent print packs Pa are only sealed/closed at the upper and lower ends of each print pack Pa but they are not cut off; hence, as shown conceptually in Fig. 2B, a plurality of print packs Pa for one order are discharged in a continuous form into the product accommodating section 68.

In order to perform only the sealing of the upper and lower ends of each print pack Pa without cutting the packaging sheet S, the following method may be employed: the heater as the seal-and-cut means 66 is so designed that the projection can be controlled for heating independently of other regions and only the sealing of the print packs P is performed without heating the projection.

Preferably, rather than completely avoiding the cutting of the packaging sheet S, the sealing and/or cutting conditions are modified, as by selectively lowering the temperature of the projection, shortening the duration of sealing/cutting with the heater (seal-and-cut means 66), reducing the pressing force of the heater, or lowering the temperature of the heater; as a result, each print pack is sealed but adjacent print packs are incompletely cut apart, so that a plurality of print packs Pa for one order are discharged in a continuous form into the product accommodating section 68.

Thus, in the case of a bulk order where the prints for one order are discharged as distributed among a plurality of print packs Pa, the present invention ensures that the print packs Pa for one order are not cut apart but remain connected during subsequent handling. This not only provides ease in verification and search of prints (or print packs) but also achieves considerable reduction in the amount of time and effort required to return the completed print packs to the customer.

In addition, as already mentioned, the print packs prepared in accordance with the present invention are characterized in that a piece of information that shows that the prints of a particular case are distributed among a plurality of print packs Pa, as exemplified by the number of print packs of that particular case, is indicated on the order print and this feature, combined with the uncut print packs, contributes to a further improvement in the efficiency of print verification and other operations.

In the present invention, the sealing and/or cutting conditions for ensuring that adjacent print packs are incompletely cut apart may be set by preliminary experimentation, simulation and the like in consideration of various factors including the constituent material of the enclosure.

While the printing apparatus of the present invention has been described above in detail, the invention is in no way limited to the embodiments described above and it should be understood that various improvements and modifications are of course possible without departing from the scope and spirit of the invention.

The foregoing embodiments relate to the case of applying the printing apparatus of the present invention in photographic printers of a type that scan-exposes a photosensitive material (photographic paper) to form a latent image and which performs a specified procedure of development and subsequent processing to prepare prints. This is not the sole case of the present invention and the concept of the invention is also applicable with advantage to an ink-jet printer, an electrophotographic printer, a thermal printer, and various other types of printers (or printing apparatuses).

## Claims

1. A printing apparatus comprising:
an image forming section for recording image on a recording medium in accordance with image data and preparing prints that reproduce the image data; and
a packer which gathers the prints prepared in the image forming section and packages them in a print pack or print packs,
wherein the image forming section prepares for each print pack an order print that shows information relevant to a particular order and supplies the prints and the order print into the packer in such a way that an information recording side of the order print will be on top of any other prints in the print pack and in the case where the prints of one order are accommodated in print packs, distribution information showing that the prints of the one order are distributed among the print packs is indicated on the order print,
and wherein the packer feeds the prints into a packaging sheet comprising enclosures that connect together for a plurality of orders and thereafter seals and cuts the packaging sheet and in the case where the prints for one order are accommodated in print packs, the packer performs only sealing of each print pack and outputs the print packs for one order in a continuous form.

2. The printing apparatus according to claim 1, wherein said packaging sheet is a tube comprising two longitudinal sheets bonded together at both edges in a transverse direction of said packaging sheet, said packaging sheet having cuts formed in one of said longitudinal sheets at given intervals extending in the transverse direction.

3. The printing apparatus according to claim 1 or 2, wherein the packer, if it outputs the print packs for the one order in the continuous form, adjacent print packs accommodating the prints for one order are incompletely cut apart by cutting apart the print packs under conditions that differ from the conditions used in an ordinary cutting process.

4. The printing apparatus according to any one of claims 1 to 3, wherein said packer heats and fuses said packaging sheet with a heating and fusing means to cut the print packs apart from one another, seal a preceding print pack, and form a lower end of a following print pack.

5. The printing apparatus according to claim 4, wherein said packer switches between cutting and non-cutting of said packaging sheet by altering conditions of heating and fusing effected by said heating and fusing means.

6. The printing apparatus according to claim 5, wherein said heating and fusing conditions are at least one of temperature of said heating and fusing, pressing force applied during said heating and fusing, and time of said heating and fusing.

7. The printing apparatus according to any one of claims 4 to 6, wherein said heating and fusing means cuts the packaging sheet at cuts formed therein, and seals said preceding print pack and forms the lower end of the following print pack by fusing the packaging sheet at locations above and below cuts.

8. The printing apparatus according to any one of claims 4 to 7, wherein said heating and fusing means comprises a projection extending in the transverse direction of said packaging sheet.

9. The printing apparatus according to claim 8, wherein said heating and fusing means cuts said packaging sheet with said projection.

10. The printing apparatus according to claim-8 or 9, wherein said projection and other areas than said projection of said heating and fusing means are controlled for heating independently of each other.

11. The printing apparatus according to any one of claims 1 to 10, wherein said distribution information indicates a total number of print packs of the one order.

12. The printing apparatus according to any one of claims 1 to 10, wherein said distribution information indicates a total number of print packs of the one order and a sequence of the print packs in the one order.

13. The printing apparatus according to any one of claims 2 to 12, wherein said packer, prior to feeding the prints into said packaging sheet, widens a cut formed in said packaging sheet by inwardly moving portions near two a transverse direction sides of said packaging sheet.

14. The printing apparatus according to any one of claims 2 to 12, wherein said packer, prior to feeding the prints into said packaging sheet, and after widening a cut formed in said packaging sheet, causes air to be blown into said packaging sheet.
